# EUROPEAN PATENT APPLICATION

(11) **EP 2 728 492 A1**
(43) Date of publication of application: **07.05.2014**
(21) Application number: 12190840.4
(22) Date of filing: 31.10.2012
(51) Int. Cl.: G06F 17/30

(54) **Data elements visualisation and user interaction method and system**

(71) Applicant: Rightware Oy, 02200 Espoo (FI)
(72) Inventor: Taylor, Roy, 02200 Espoo (FI); Koivu, Tero, 02200 Espoo (FI); Ruotsalainen, Arto, 02200 Espoo (FI)
(74) Representative: Lipsanen, Jari Seppo Einari

(57) **Abstract**

A method of generating and populating a three-dimensional wireframe body is provided. The method comprises the steps of retrieving data elements to be displayed to a user, the data elements being stored on a remote server, generating a three-dimensional wireframe body having a plurality of sides, with at least one side being divided into a plurality of receiving slots, arranging and displaying the data elements in the plurality of receiving slots of the wireframe body, and allowing the user, through a user input means, to rotate the filled three-dimensional wireframe body along at least one axis.

## Description

### FIELD OF THE INVENTION

This invention relates to a method of and system for facilitating visualisation of, and user interaction with, data elements. In particular, this invention relates to data elements associated with online content, such as websites, software applications, advertisements or any other information that exists online.

### BACKGROUND TO THE INVENTION

The explosion of online content over the last decade has been overwhelming. However, a current problem with online content is that it is scattered around multiple websites and hosts of software applications ('apps'). In addition, the plethora of online content is not personalized or customized according to a user's preferences or interests, which makes the accumulation of and interaction with online content laborious and time consuming.

The aim of the present invention is thus to provide a real-time 3D widget that displays data elements to a user in an intuitive and easily interactive manner. In an embodiment, the aim of the present invention is to select user-customized data elements, which may then be displayed to the user.

### SUMMARY OF THE INVENTION

According to a first aspect of the invention there is provided a method of generating and populating a three-dimensional wireframe body comprising the steps of;
- retrieving data elements to be displayed to a user, the data elements being stored on a remote server,
- generating a three-dimensional wireframe body having a plurality of sides, with at least one side being divided into a plurality of receiving slots,
- arranging and displaying the data elements in the plurality of receiving slots of the wireframe body, and
- allowing the user, through a user input means, to rotate the filled three-dimensional wireframe body along at least one axis.

In an embodiment, the step of retrieving data elements to be displayed to the user includes the step of receiving data elements from the remote server that are user-independent.

Alternatively, the step of retrieving data elements to be displayed to the user includes the steps of identifying the user, retrieving a list of user-customized categories of elements from the remote server, and receiving from the remote server data elements associated with the user-customized categories (i.e. preferences of the user, physical locality of the user in real time).

Further alternatively, the step of retrieving the data elements to be displayed to the user includes the steps of prompting the user to search for an element, receiving a search string from the user through the user input means, requesting the remote server to conduct a search using the search string, and receiving data elements that match or potentially match the search string.

In an embodiment, the displayed data elements in the receiving slots are either active, wherein the user can select the data element to trigger an external event, or passive, wherein the data element does not trigger an external event.

In an embodiment, and in respect of active data elements, the method comprises the steps of allowing a user, through the user input means, to select any of the active data elements (in the slots of the filled wireframe body), with each active data element having a corresponding resource location that resides on either the remote server or an external server, in which case the remote server serves as a link between the user and the external server.

In an embodiment, in response to the user selecting an active data element, the user is redirected to the associated resource location.

In an embodiment, and in respect of passive data elements, the passive data elements comprise data, including, but not limited to, images, text or other static information.

In an embodiment, the method includes the step of checking with the remote server to ensure that the data elements being displayed on the wireframe body are up to date.

In an embodiment, each side of the wireframe body represents a category, with each data element in the slots of a particular side being related to the category.

According to a second aspect of the invention there is provided a system for generating and populating a three-dimensional wireframe body comprising a processor that is arranged to;
- retrieve data elements to be displayed to a user, the data elements being stored on a remote server,
- generate a three-dimensional wireframe body having a plurality of sides, with at least one side being divided into a plurality of receiving slots,
- arrange and display the data elements in the plurality of receiving slots of the wireframe body, and
- allow a user, through a user input means, to rotate the filled three-dimensional wireframe body along at least one axis.

In an embodiment, the processor is arranged to receive data elements from the remote server that are user-independent.

Alternatively, the processor is arranged to identify the user, retrieve a list of user-customized categories of elements from the remote server, and receive from the remote server data elements associated with the user-customized categories.

Further alternatively, the processor is arranged to prompt the user to search for a data element, receive a search string from the user through the user input means, request the remote server to conduct a search using the search string, and receive data elements that match or potentially match the search string.

In an embodiment, the displayed data elements in the receiving slots are either active, wherein the user can select the data element to trigger an external event, or passive, wherein the data element does not trigger an external event.

In an embodiment, and in respect of active data elements, the processor is arranged to allow a user, through the user input means, to select any of the active data elements, with each active data element having a corresponding resource location that resides on either the remote server or an external server, in which case the remote server serves as a link between the user and the external server.

In an embodiment, in response to the user selecting an active data element, the processor is arranged to redirect the user to the associated resource location.

In an embodiment, and in respect of passive data elements, the passive data elements comprise data, including, but not limited to, images, text or other static information.

In an embodiment, the processor is arranged to check with the remote server to ensure that the data elements being displayed on the wireframe body are up to date.

In an embodiment, each side of the wireframe body represents a category, with each data element in the slots of a particular side being related to the category.

According to a third aspect of the invention there is provided a non-transitory computer readable medium having stored thereon a set of computer readable instructions for causing a processor to generate and populate a three-dimensional wireframe prism comprising the computer implemented steps of;
- retrieving data elements to be displayed to a user, the data elements being stored on a remote server,
- generating a three-dimensional wireframe body having a plurality of sides, with at least one side being divided into a plurality of receiving slots;
- arranging and displaying the data elements in the plurality of receiving slots of the wireframe body, and
- allowing a user, through a user input means, to rotate the filled three-dimensional wireframe body along at least one axis.

In an embodiment, the step of retrieving data elements to be displayed to the user includes the step of receiving data elements from the remote server that are user-independent.

Alternatively, the step of retrieving data elements to be displayed to the user includes the steps of identifying the user, retrieving a list of user-customized categories of elements from the remote server, and receiving from the remote server data elements associated with the user-customized categories.

Further alternatively, the step of retrieving the data elements to be displayed to the user includes the steps of prompting the user to search for an element, receiving a search string from the user through the user input means, requesting the remote server to conduct a search using the search string, and receiving data elements that match or potentially match the search string.

In an embodiment, the displayed data elements in the receiving slots are either active, wherein the user can select the data element to trigger an external event, or passive, wherein the data element does not trigger an external event.

In an embodiment, and in respect of active data elements, the computer implemented steps comprises the steps of allowing a user, through the user input means, to select any of the active data elements, with each active data element having a corresponding resource location that resides on either the remote server or an external server, in which case the remote server serves as a link between the user and the external server.

In an embodiment, in response to the user selecting an active data element, the user is redirected to the associated resource location.

In an embodiment, and in respect of passive data elements, the passive data elements comprise data, including, but not limited to, images, text or other static information.

In an embodiment, the computer implemented steps include the step of checking with the remote server to ensure that the data elements being displayed on the wireframe body are up to date.

In an embodiment, each side of the wireframe body represents a category, with each data element in the slots of a particular side being related to the category.

According to a fourth aspect of the invention there is provided a system for generating and populating a three-dimensional wireframe body, the system comprising;
- a user device associated with a user, the user device comprising a processor, a display and user input means; and
- a server remote from the user device but in communication with the user device, the server comprising storage means to store data elements, the remote server being arranged to send data elements to the user device for display on the user device display,
wherein the user processor of the user device is arranged to:
- generate a three-dimensional wireframe body having a plurality of sides, with at least one side being divided into a plurality of receiving slots;
- arrange and display the data elements in the plurality of receiving slots of the wireframe body; and
- allow the user, through the user input means, to rotate the filled three-dimensional wireframe body along at least one axis.

In an embodiment, the data elements sent by the remote server to the user device are user-independent.

Alternatively, the user device processor is arranged to identify the user, retrieve a list of user-customized categories of elements from the remote server, and receive from the remote server data elements associated with the user-customized categories.

Further alternatively, the user device processor prompts the user to search for a data element by enabling the user to provide a search string using the user input means, to thereby enable the remote server to conduct a search using the search string, and once searched, the remote server sends the data elements that match or potentially match the search string to the user device.

In an embodiment, the displayed data elements in the receiving slots are either active, wherein the user can select the data element to trigger an external event, or passive, wherein the data element does not trigger an external event.

In an embodiment, and in respect of active data elements, the user device processor allows a user, through the user input means, to select any of the active data elements, with each active data element having a corresponding resource location that resides on either the remote server or an external server, in which case the remote server serves as a link between the user and the external server.

In an embodiment, in response to the user selecting an active data element, the user is redirected to the associated resource location.

In an embodiment, and in respect of passive data elements, the passive data elements comprise data, including, but not limited to, images, text or other static information.

According to a fifth aspect of the invention there is provided a method of retrieving and displaying an interactive three-dimensional wireframe body, the method comprising the steps of;
- retrieving a first set of data elements to be displayed to a user, the data elements being stored on a remote server,
- generating a two-dimensional wireframe body having a plurality of receiving slots;
- arranging and displaying the first set of data elements in the plurality of receiving slots of the two-dimensional wireframe body,
- receiving an input from the user to interact with the two-dimensional wireframe body;
- generating a three-dimensional wireframe body by providing a plurality of sides that extend from the erstwhile two-dimensional wireframe body, with the sides also being divided into a plurality of receiving slots, and
- arranging and displaying additional sets of data elements in the plurality of receiving slots of the newly provided sides of the three-dimensional wireframe body.

In an embodiment, the method allows a user, through a user input means, to rotate the three-dimensional wireframe body along at least one axis.

In an embodiment, the step of retrieving data elements to be displayed to the user includes the step of receiving data elements from the remote server that are user-independent.

Alternatively, the step of retrieving data elements to be displayed to the user includes the steps of identifying the user, retrieving a list of user-customized categories of elements from the remote server, and receiving from the remote server data elements associated with the user-customized categories.

Further alternatively, the step of retrieving the data elements to be displayed to the user includes the steps of prompting the user to search for an element, receiving a search string from the user through the user input means, requesting the remote server to conduct a search using the search string, and receiving data elements that match or potentially match the search string.

In an embodiment, the displayed data elements in the receiving slots are either active, wherein the user can select the data element to trigger an external event, or passive, wherein the data element does not trigger an external event.

In an embodiment, and in respect of active data elements, the method comprises the steps of allowing a user, through the user input means, to select any of the active data elements, with each active data element having a corresponding resource location that resides on either the remote server or an external server, in which case the remote server serves as a link between the user and the external server.

In an embodiment, and in respect of passive data elements, the passive data elements comprise data, including, but not limited to, images, text or other static information.

An aim of the present invention is thus to provide a real-time 3D widget that displays data elements to a user in an intuitive and easily interactive manner. In an embodiment, the aim of the present invention is to select user-customized data elements, which may then be displayed to the user.

### BRIEF DESCRIPTION OF THE DRAWINGS

The invention will be described, by way of example only, with reference to the accompanying drawings in which:
Figure 1 shows a high level schematic view of a system for generating and populating a three-dimensional wireframe body, according to a first aspect of the present invention;
Figure 2 shows a flowchart representing a method of generating and populating a three-dimensional wireframe, according to a second aspect of the present invention;
Figure 3 shows a flowchart representing a method of retrieving and displaying an interactive three-dimensional wireframe body, according to a third aspect of the present invention; and
Figures 4A to 4C show various representations of a user device showing the solution of the present invention in use.

### DETAILED DESCRIPTION OF PREFERRED EMBODIMENTS

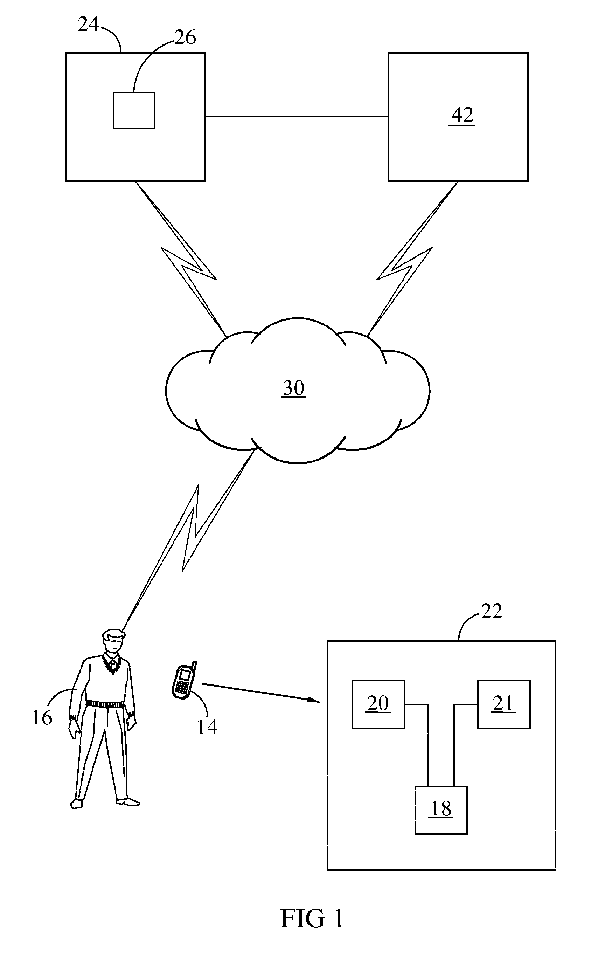

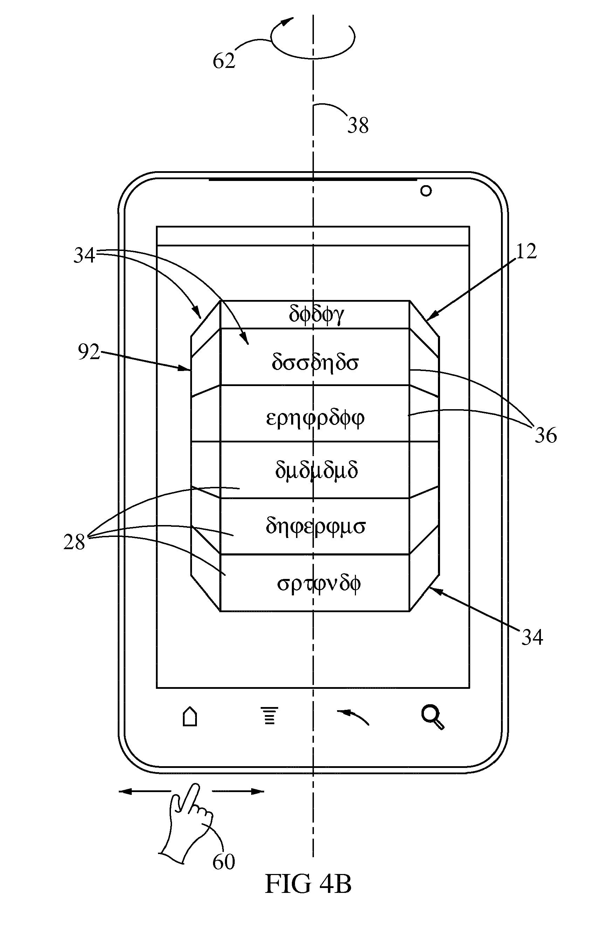

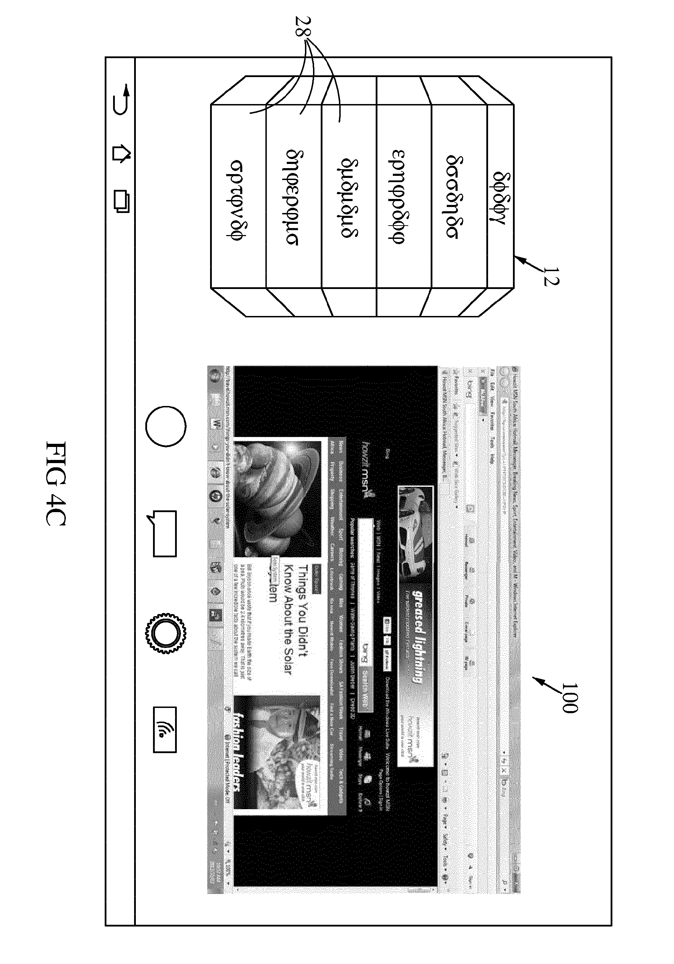

In broad terms, and with particular reference to Figure 1, there is provided a system 10 for generating and populating a three-dimensional wireframe body 12, such as of the type shown in Figures 4B and 4C. The system 10 comprises a user device 14 associated with a user 16, the user device 14 comprising a processor 18, a display 20 and user input means 21, as shown in the schematic block 22.

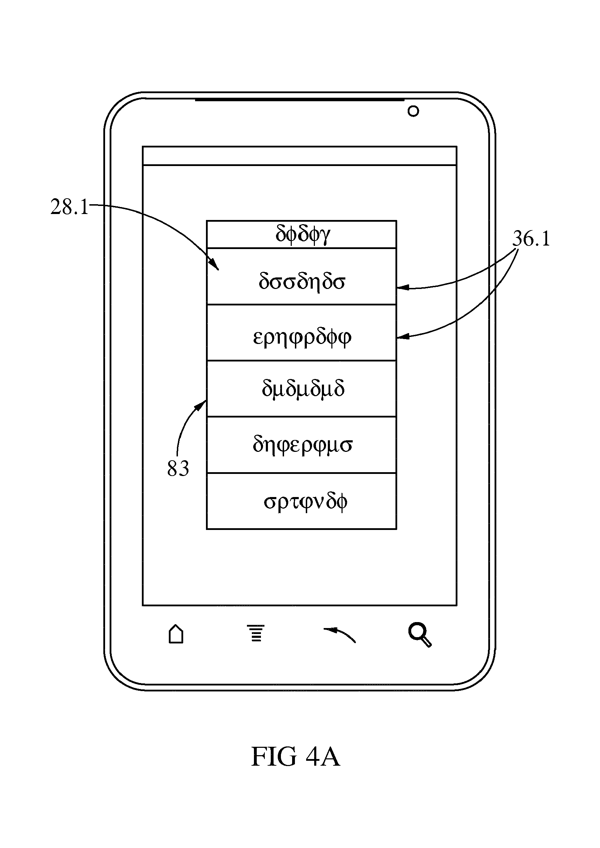

The system 10 further comprises an online server 24 remote from the user device 14, the server 24 comprising storage means 26 to store data elements (indicated by reference numeral 28 in Figures 4A and 4B). As will become clearer further on in the specification, in one embodiment, the remote server 24 may be arranged to send data elements 28 to the user device 14 for display on the user device display 20.

A communications network 30 is also provided to enable data, including the data elements 28, to be exchanged between the user device 14 and the remote server 24, which can be done in any one of a number of well known ways. Thus, for example, in the case of the user device 14 taking the form of a mobile smartphone, the network 30 may comprise a GSM cellular telephone network.

In use, and with reference now also to Figures 4B and 4C, the processor 18 of the user device 14 is arranged to generate the three-dimensional wireframe body 12 having a plurality of sides 34, with at least one side, but typically all sides, being divided into a plurality of receiving slots 36. The sides 34 of the wireframe body 12 represent pages that may be flipped or rotated, as will be explained in more detail further below, with the number of pages, as well as the number of slots per page, being customizable. The size of the wireframe body 12 depends on a number of factors, such as resolution and UI layout.

The wireframe body 12 may take the form of a prism, in particular a hexagonal prism, which is rotatable about an axis 38. The processor 18 then arranges and displays the data elements 28 in the plurality of receiving slots 36 of the wireframe body 12. Thus, in broad terms, the present invention thus enables online content to be displayed on a display screen 20 inside a widget in the form of a 3D wireframe body 12. The widget thus fetches data elements 28 from the remote server 24, with the 3D widget thus being updated in real-time on the user device 14.

In an embodiment where the wireframe body 12 takes the form of a hexagonal prism or the like then 3 or more sides of the prism are displayed to the user at any given time. The central most said can be displayed more or less in a normal manner without distortion and the two boardering sides can be displayed at an angle, tilted away from the user as is shown in Figures 4B and 4C. While the embodiments of said figures are of a wireframe body having, or at least displayed to appear to have, six sides a similar wireframe body 12 may have additional sides. For example, the wireframe body may have seven, eight, nine, etc. sides but may only show three sides as is shown in Figures 4B and 4C.

The portion of the wireframe body 12 which is displayed does not necessarily need to be an accurate representation of the true angles and dimensions of the underlying geometric shape. For instance, for a wireframe body 12 which is a regular hexagonal prism, the angles between each side are geometrically fixed at 120°. When a wireframe body 12, which is a hexagonal prism, is being rotated around axis 38 it is preferable, though not necessary, that the true geometric angles of the prism are displayed to the user as they are to be expected by the user. However, once a side of the prism is centered, and possibly at a predetermined time after rotation has ceased, the two non-centered sides may distort slightly by either increasing or reducing the internal angle of the sides of the wireframe body 12.

For instance, if space is a concern on the display then once a side is centered the width of the centered side can be increased and the internal angles of the connected sides can be decreased such that the display of the wireframe body 12 takes up the same amount of space as normal, however with the result of more space dedicated to the centered side. Prior to, or once the prism begins to rotate again the dimensions of the sides and the angles between them can return to normal.

Another example would be if space on the display is not a concern but ensuring functionality and readability of the non-centered sides is of concern. In such an embodiment, once a side is centered, or after a predetermined time, the internal angle connecting the adjacent sides can be increased, thereby resulting in the sides being extended towards the user so that the content on the sides is more easily accessible and readable for a user.

When discussing the centered side, the side which is closest to being centered can be considered as the centered side. If the wireframe body 12 is freely rotatable by a user then the user will typically not be able to perfectly center a side. Once a side is within a predetermined range of the center the side may be automatically rotated so that it is centered for the user. Similarly, if a user slightly rotates the wireframe body 12 but does not rotate it outside of a predetermined range then the side may be automatically rotated back to the center.

While the embodiment shown herein in the figures is displayed front-on, and therefore does not display a top or bottom side, the wireframe body 12 may none the less comprise a top and/or bottom side. Such a top or bottom side may have a single master, or universal function such as, for example, a home function, back function, homepage function, on/off function etc. A top or bottom side may also be partitioned and have multiple functions as described with regards to the sides herein. Additionally, certain geometries of a wireframe body 12 allow for a top portion and/or bottom portion to have more than one side. In such an embodiment at least a portion of one top and/or bottom side can, and most likely will be displayed at all time. Such a side can have functionality as described herein with regards to either the top and/or bottom sides or the normal sides.

One of ordinary skill will recognize countless variations and combinations of the features disclosed herein for changing the dimensions and internal angles of the wireframe body upon certain predetermined events, such as a side being centered, or nearly centered, for a predetermined length of time, which do not depart from the scope of the present invention.

In an embodiment, each side 34 of the wireframe body 12 represents a category, such as Entertainment, Business, Games, or New Apps, Free Apps etc. Each data element 28 in the slots 36 of a particular side 34 may then be related to the category. The user may thus select the category that he/she wants to see. However, the arrangement of the data elements may be done in many other ways. For example, the remote server 24 may simply determine this arrangement, or the user 16 may customize this as he or she wishes.

The processor 18 is then arranged to allow the user 16, through the user input means 21, to rotate the filled three-dimensional wireframe body 12 along at least one axis, typically the vertical axis 38.

In an embodiment, the data elements 28 sent by the remote server 24 to the user device 14 are user-independent. In other words, the remote server 24 compiles and sends data elements 28 in accordance with an internal protocol.

Alternatively, the user device processor 18 may be arranged to identify the user 16, retrieve a list of user-customized categories of elements from the remote server 24, and receive from the remote server 24 data elements 28 associated with the user-customized categories. Thus, in this case, the user 16 would have pre-selected categories of interest to him/her, with the storage means 26 of the remote server 24 accordingly being arranged into categories and data elements within the categories.

Further alternatively, the user device processor 18 may prompt the user 16 to search for a data element 28 by enabling the user 16 to provide a search string using the user input means 21. This search string is then sent to the remote server 24, to thereby enable the remote server 24 to conduct a search, using the search string, through its storage means 26 and/or an external resource. Once searched, the remote server 24 sends the data elements 28 that match or potentially match the search string to the user device 14, for subsequent display on the wireframe body 12.

Turning now to the displayed data elements 28 themselves, the data elements 28 may either be active, wherein the user 16 can select the data element 28 to trigger an external event, or passive, wherein the data element 28 does not trigger an external event (but is simply a static display of data, such as images, text or other static information).

In respect of active data elements 28, the user device processor 18 allows a user 16, through the user input means 21, to select any of the active data elements 28 so as to trigger the external event. This is best shown in Figures 4C. In an embodiment, each active data element 28 has a corresponding resource location that resides on either the device 14 itself, the remote server 24 or on an external server 42, in which case the remote server 24 serves as a link between the user 16 and the external server 42.

The resource location may in turn host advertisements, videos, applications, or may take the form of a website. The user 16 may then select an active data element 28 in any of the slots 36, using the user input means 21, when he or she wishes to open a website or launch an application at the resource location. Depending on the device, this may entail the user 16 touching the display 20, or using other well known techniques such as clicking an icon or pressing a particular button. In the case of software applications, for example, if the application has already installed on the user's device 14 it will launch, otherwise the present invention will direct the user 16 to an AppStore host from which he or she may buy/download/install the application. The present invention thus provides online connectivity to an external server 42 via a separate service provided by the 3D widget of the present invention.

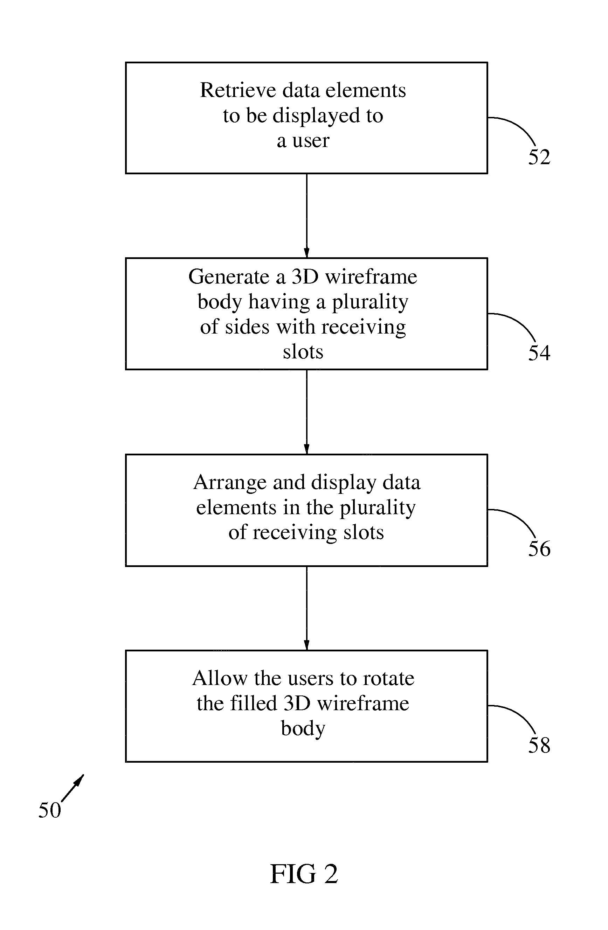

Turning now to Figure 2, a method 50 of generating and populating a three-dimensional wireframe, according to a further aspect of the present invention, will now be described in more detail. The method 50 comprises the step of retrieving data elements to be displayed to a user, the data elements being stored on a remote server, as indicated by block 52.

The method 50 further comprises the step of generating a three-dimensional wireframe body having a plurality of sides, with at least one side, but typically each side, being divided into a plurality of receiving slots, as indicated by block 54.

The method further 50 comprises the step of arranging and displaying the data elements in the plurality of receiving slots of the wireframe body, as indicated by block 56.

The method 50 further comprises the step of allowing a user, through a user input means, to rotate the filled three-dimensional wireframe body along at least one axis. This is indicated by block 58 in Figure 2 and is best shown in Figure 4B, which shows a user's finger 60 rotating the filled wireframe body by swiping left or right on the screen, as indicated by 62. Clearly, with other devices, this may be achieved by clicking a particular icon or even pressing a particular button on a keyboard.

In an embodiment, the step of retrieving data elements to be displayed to the user includes the step of receiving data elements from the remote server that are user-independent, as described above.

Alternatively, the step 52 of retrieving data elements to be displayed to the user includes the steps of identifying the user and retrieving a list of user-customized categories of elements from the remote server. The data elements are received from the remote server, with these data elements being associated with the user-customized categories, as described above.

Further alternatively, the step of retrieving the data elements to be displayed to the user includes the steps of prompting the user to search for an element, receiving a search string from the user through the user input means, requesting the remote server to conduct a search using the search string, and receiving data elements that match or potentially match the search string.

As indicated above, the displayed data elements in the receiving slots are either active or passive, but these features have been described above and will thus not be repeated.

In an embodiment, the method 50 may further include the step of checking with the remote server to ensure that the data elements being displayed on the wireframe body are up to date. This may typically be done by pinging the remote server.

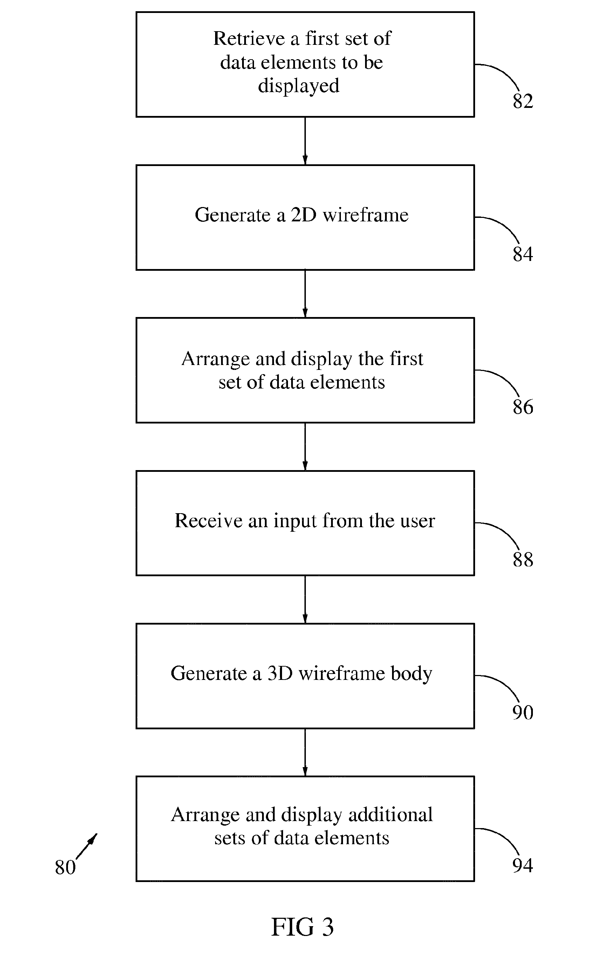

Turning now to Figure 3, a method 80 of retrieving and displaying an interactive three-dimensional wireframe body will be described, with reference also to Figures 4A to 4C. According to this aspect, the method 80 comprises the steps of retrieving a first set of data elements 28.1 to be displayed to a user, the data elements 28.1 being stored on a remote server, as indicated by block 82.

The method 80 then comprises generating a two-dimensional wireframe body 83 having a plurality of receiving slots 36.1, as indicated by block 84, and then arranging and displaying the first set of data elements 28.1 in the plurality of receiving slots 36.1 of the two-dimensional wireframe body 83, as indicated by block 86. Thus, in a default state, as shown in Figure 4A, only one page (or side of the wireframe body) is shown.

The method 80 then comprises the step of receiving an input from the user to interact with the two-dimensional wireframe body, as indicated by block 88. This may be achieved by the user tapping once (or activating the wireframe body in any one of a number of ways, such as the click of mouse, or the pressing of dedicated keyboard key), to enable the user to enter a full screen mode, which is shown in Figure 4B.

The method 80 then comprises the step of generating a three-dimensional wireframe body by providing a plurality of sides that extend from the erstwhile two-dimensional wireframe body, with the sides also being divided into a plurality of receiving slots, as indicated by block 90. The result, as shown in Figure 4B, defines a full screen mode, in which the 2D wireframe body has been transformed into the 3D wireframe body, with side faces 92, as shown. In other words, non-displayed sides of the body are populated when the user moves from the default state to the full screen mode. The user may return back to the default state by tapping or activating an area outside of the 3D wireframe body, or by using a provided 'Back' button, which may be on a displayed, or non-displayed top and/or bottom side as discussed above.

The method 80 concludes by arranging and displaying additional sets of data elements in the plurality of receiving slots of the newly provided sides of the three-dimensional wireframe body, as described above, and as indicated by block 94. The user can then cycle through the pages by using left/right swipe gestures to rotate the three-dimensional wireframe body along at least one axis to view additional possible data elements, as described above.

The other features described above, such as having user-independent or customized data elements and categories, allowing the user to search for a data element, the data elements being either active or passive, may apply here too.

For display purposes a hexagonal prism is the most effective geometric shape. However, a hexagonal prism, as shown in figures 4B and 4C only has six available sides for populating with data elements. In embodiments where additional sides would be useful the geometry of the wireframe body 12 can be chosen to incorporate the desired number of additional sides. However, another option is for there to be more than 3, and effectively an unlimited number of un-displayed sides of a hexagonal, or other shaped, prism. The content of the un-displayed sides may be pre-populated or may be populated when, or at a predetermined instance prior to, the next un-displayed side being displayed to the user.

Such an embodiment works particularly well with the use of a hexagonal prism as when viewing a hexagonal prism from front-on a user only sees 3 and potentially a maximum of 4 sides at any one time. Therefore, it does not affect a user's perception of the display if there are in fact, for example 20 un-displayed side. As a further example, the display and wireframe body 12 could be similar to that of looking front-on at a dry cleaning belt, wherein it is impossible for a user to tell how far back the un-displayed sides go. However by rotating the wireframe body 12 they will have access to more than six sides worth of content while the geometry and dimensions of the prism appear to be a hexagon.

Figure 4C shows a launched application 100 at a resource location residing on an external server. In an embodiment, the three-dimensional wireframe body 12 remains displayed on the screen to facilitate further inputs from the user.

Although not shown, as is well known, a loading bar may be displayed when the 3D widget is fetching data from the remote server. Similarly, after a certain amount of time, the 3D widget may stop trying to connect to the remote server upon a connection failure.

Advantageously, when in an offline mode in which no internet connection is available (or in which it has been disabled), the visualization described above is still available. In particular, the filled three-dimensional wireframe body will display the data elements that had been retrieved after the latest synchronization with the remote server, prior to entering the offline mode. In the offline mode, as expected, the user will not be able to interact with any of the active data elements in the wireframe body.

The invention may also be described in terms of the present clauses:
Clause 1, a method of generating and populating a three-dimensional wireframe body comprising the steps of; retrieving data elements to be displayed to a user, t elements being stored on a remote server, generating a three-dimensional wireframe body having a plurality of sides, with at least one side being divided into a plurality of receiving slots, arranging and displaying the data elements in the plurality of receiving slots of the wireframe body, and allowing the user, through a user input means, to rotate the filled three-dimensional wireframe body along at least one axis.
Clause 2, The method of clause 1, wherein the step of retrieving data elements to be displayed to the user includes the step of receiving data elements from the remote server that are user-independent.
Clause 3, The method of any of the preceding clauses, wherein the step of retrieving data elements to be displayed to the user includes the steps of identifying the user, retrieving a list of user-customized categories of elements from the remote server, and receiving from the remote server data elements associated with the user-customized categories.
Clause 4, The method of any of the preceding clauses, wherein the step of retrieving the data elements to be displayed to the user includes the steps of prompting the user to search for an element, receiving a search string from the user through the user input means, requesting the remote server to conduct a search using the search string, and receiving data elements that match or potentially match the search string.
Clause 5, The method of any of the preceding clauses, wherein the displayed data elements in the receiving slots are either active, wherein the user can select the data element to trigger an external event, or passive, wherein the data element does not trigger an external event.
Clause 6, The method of clause 5, wherein in respect of active data elements, the method comprises the steps of allowing a user, through the user input means, to select any of the active data elements, with each active data element having a corresponding resource location that resides on either the remote server or an external server.
Clause 7, The method of clause 5 or 6, wherein in response to the user selecting an active data element, the user is redirected to the associated resource location.
Clause 8, The method of any of clauses 5-7, wherein in respect of passive data elements, the passive data elements comprise data, including, but not limited to, images, text or other static information.
Clause 9, The method of any of the preceding clauses, which includes the step of checking with the remote server to ensure that the data elements being displayed on the wireframe body are up to date.
Clause 10, The method of any of the preceding clauses, wherein each side of the wireframe body represents a category, with each data element in the slots of a particular side being related to the category.
Clause 11, A system for generating and populating a three-dimensional wireframe body comprising a processor that is arranged to; retrieve data elements to be displayed to a user, the data elements being stored on a remote server, generate a three-dimensional wireframe body having a plurality of sides, with at least one side being divided into a plurality of receiving slots, arrange and display the data elements in the plurality of receiving the wireframe body, and allow a user, through a user input means, to rotate the filled three-dimensional wireframe body along at least one axis.
Clause 12, The system of clause 11, wherein the processor is arranged to receive data elements from the remote server that are user-independent.
Clause 13, The system of clause 11 or 12, wherein the processor is arranged to identify the user, retrieve a list of user-customized categories of elements from the remote server, and receive from the remote server data elements associated with the user-customized categories.
Clause 14, The system of any of clauses 11-13, wherein the processor is arranged to prompt the user to search for a data element, receive a search string from the user through the user input means, request the remote server to conduct a search using the search string, and receive data elements that match or potentially match the search string.
Clause 15, The system of any of clauses 11-14, wherein the displayed data elements in the receiving slots are either active, wherein the user can select the data element to trigger an external event, or passive, wherein the data element does not trigger an external event.
Clause 16, The system of clause 15, wherein in respect of active data elements, the processor is arranged to allow the user, through the user input means, to select any of the active data elements, with each active data element having a corresponding resource location that resides on either the remote server or an external server.
Clause 17, The system of clause 15 or 16, wherein in response to the user selecting an active data element, the processor is arranged to redirect the user to the associated resource location.
Clause 18, The system of any of clauses 15-17, wherein in respect of passive data elements, the passive data elements comprise data, including, but not limited to, images, text or other static information.
Clause 19, The system of any of clauses 11-18, wherein the processor is arranged to check with the remote server to ensure that the data elements being displayed on the wireframe body are up to date.
Clause 20, The system of any of clauses 11-19, wherein each side of the wireframe body represents a category, with each data element in the slots of a particular side being related to the category.
Clause 21, A non-transitory computer readable medium having stored thereon a set of computer readable instructions for causing a processor to generate and populate dimensional wireframe prism comprising the computer implemented steps of; retrieving data elements to be displayed to a user, the data elements being stored on a remote server, generating a three-dimensional wireframe body having a plurality of sides, with at least one side being divided into a plurality of receiving slots; arranging and displaying the data elements in the plurality of receiving slots of the wireframe body, and allowing a user, through a user input means, to rotate the filled three-dimensional wireframe body along at least one axis.
Clause 22, The non-transitory computer readable medium of clause 21, wherein the step of retrieving data elements to be displayed to the user includes the step of receiving data elements from the remote server that are user-independent.
Clause 23, The non-transitory computer readable medium of clause 21 or 22, wherein the step of retrieving data elements to be displayed to the user includes the steps of identifying the user, retrieving a list of user-customized categories of elements from the remote server, and receiving from the remote server data elements associated with the user-customized categories.
Clause 24, The non-transitory computer readable medium of any of clauses 21-23, wherein the step of retrieving the data elements to be displayed to the user includes the steps of prompting the user to search for an element, receiving a search string from the user through the user input means, requesting the remote server to conduct a search using the search string, and receiving data elements that match or potentially match the search string.
Clause 25, The non-transitory computer readable medium of any of clauses 21-24, wherein the displayed data elements in the receiving slots are either active, wherein the user can select the data element to trigger an external event, or passive, wherein the data element does not trigger an external event.
Clause 26, The non-transitory computer readable medium of clause 25, wherein in respect of active data elements, the computer implemented steps comprises the steps of allowing a user, through the user input means, to select any of the active data elements, with each active data element having a corresponding resource location that resides on either the remote server or an external server.
Clause 27, The non-transitory computer readable medium of clause 25 or 26, wherein in response to the user selecting an active data element, the user is redirected to the associated resource location.
Clause 28, The non-transitory computer readable medium of any of clauses 25-27, wherein in respect of passive data elements, the passive data elements comprise data, including, but not limited to, images, text or other static information.
Clause 29, The non-transitory computer readable medium of any of clauses 21-28, wherein the computer implemented steps include the step of checking with the remote server to ensure that the data elements being displayed on the wireframe body are up to date.
Clause 30, The non-transitory computer readable medium of any of clauses 21-30, wherein each side of the wireframe body represents a category, with each data element in the slots of a particular side being related to the category.
Clause 31, A system for generating and populating a three-dimensional wireframe body, the system comprising; a user device associated with a user, the user device comp processor, a display and user input means; and a server remote from the user device but in communication with the user device, the server comprising storage means to store data elements, the remote server being arranged to send data elements to the user device for display on the user device display, wherein the user processor of the user device is arranged to: generate a three-dimensional wireframe body having a plurality of sides, with at least one side being divided into a plurality of receiving slots; arrange and display the data elements in the plurality of receiving slots of the wireframe body; and allow the user, through the user input means, to rotate the filled three-dimensional wireframe body along at least one axis.
Clause 32, The system of clause 31, wherein the data elements sent by the remote server to the user device are user-independent.
Clause 33, The system of clause 30 or 31, wherein the user device processor is arranged to identify the user, retrieve a list of user-customized categories of elements from the remote server, and receive from the remote server data elements associated with the user-customized categories.
Clause 34, The system of any of clauses 31-33, wherein the user device processor prompts the user to search for a data element by enabling the user to provide a search string using the user input means, to thereby enable the remote server to conduct a search using the search string, and once searched, the remote server sends the data elements that match or potentially match the search string to the user device.
Clause 35, The system of any of clauses 31-34, wherein the displayed data elements in the receiving slots are either active, wherein the user can select the data element to trigger an external event, or passive, wherein the data element does not trigger an external event.
Clause 36, The system of any of clauses 31-35, wherein in respect of active data elements, the user device processor allows a user, through the user input means, to select any of the active data elements, with each active data element having a corresponding resource location that resides on either the remote server or an external server.
Clause 37, The system of clause 36, wherein in response to the user selecting an active data element, the user is redirected to the associated resource location.
Clause 38, The system of clause 35 or 36, wherein in respect of passive data elements, the passive data elements comprise data, including, but not limited to, images, text or other static information.
Clause 39, A method of retrieving and displaying an interactive three-dimensional wireframe body, the method comprising the steps of; retrieving a first set of data e to be displayed to a user, the data elements being stored on a remote server, generating a two-dimensional wireframe body having a plurality of receiving slots; arranging and displaying the first set of data elements in the plurality of receiving slots of the two-dimensional wireframe body, receiving an input from the user to interact with the two-dimensional wireframe body; generating a three-dimensional wireframe body by providing a plurality of sides that extend from the erstwhile two-dimensional wireframe body, with the sides also being divided into a plurality of receiving slots, and arranging and displaying additional sets of data elements in the plurality of receiving slots of the newly provided sides of the three-dimensional wireframe body.
Clause 40, A method in accordance with any of clauses 1-10, wherein three sides of the wireframe body are displayed to the user.
Clause 41, A method in accordance with any of clauses 1-10 or 40, wherein the wireframe body has the geometry of a regular hexagonal prism.
Clause 42, A method in accordance with any of clauses 1-10 or 40, wherein the displayed portion of the wireframe body has the geometry of a regular hexagonal prism.
Clause 43, A method in accordance with clause 42, wherein the wireframe body has more than three un-displayed sides.
Clause 44, A method in accordance with any of clauses 40-43, wherein upon one or more predetermined parameters a side of the wireframe body is centered on the display.
Clause 45, A method in accordance with clause 44, wherein centering of the side includes displaying the side front-on without distortion.
Clause 46, A method in accordance with any of clauses 40-45, wherein upon one or more predetermined parameters the internal angle between a centered side and one or both of the adjacent sides is increased or decreased.
Clause 47, A method in accordance with clause 46, wherein the predetermined parameters are selected from the group of; a side being centered, a side being centered for a predetermined amount of time, a predetermined amount of time of inaction of a user, a side passing a predetermined center region, an action by a user for changing the internal angle between a centered side and one or both of the adjacent sides, a combination thereof.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A method of generating and populating a three-dimensional wireframe body comprising the steps of;
- retrieving data elements to be displayed to a user, the data elements being stored on a remote server,
- generating a three-dimensional wireframe body having a plurality of sides, with at least one side being divided into a plurality of receiving slots,
- arranging and displaying the data elements in the plurality of receiving slots of the wireframe body, and
- allowing the user, through a user input means, to rotate the filled three-dimensional wireframe body along at least one axis.

2. The method of claim 1, wherein the step of retrieving data elements to be displayed to the user includes the step of receiving data elements from the remote server that are user-independent.

3. The method of any of the preceding claims, wherein the step of retrieving data elements to be displayed to the user includes the steps of identifying the user, retrieving a list of user-customized categories of elements from the remote server, and receiving from the remote server data elements associated with the user-customized categories.

4. The method of any of the preceding claims, wherein the step of retrieving the data elements to be displayed to the user includes the steps of prompting the user to search for an element, receiving a search string from the user through the user input means, requesting the remote server to conduct a search using the search string, and receiving data elements that match or potentially match the search string.

5. The method of any of the preceding claims, wherein the displayed data elements in the receiving slots are either active, wherein the user can select the data element to trigger an external event, or passive, wherein the data element does not trigger an external event.

6. The method of claim 5, wherein in respect of active data elements, the method comprises the steps of allowing a user, through the user input means, to select any of the active data elements, with each active data element having a corresponding resource location that resides on either the remote server or an external server.

7. The method of claim 5 or 6, wherein in response to the user selecting an active data element, the user is redirected to the associated resource location.

8. The method of any of claims 5-7, wherein in respect of passive data elements, the passive data elements comprise data, including, but not limited to, images, text or other static information.

9. The method of any of the preceding claims, which includes the step of checking with the remote server to ensure that the data elements being displayed on the wireframe body are up to date.

10. The method of any of the preceding claims, wherein each side of the wireframe body represents a category, with each data element in the slots of a particular side being related to the category.

11. A method in accordance with any of the preceding claims, wherein the displayed portion of the wireframe body has the geometry of a regular hexagonal prism.

12. A method in accordance with any of the preceding claims, wherein upon one or more predetermined parameters a side of the wireframe body is centered on the display.

13. A method in accordance with any of the preceding claims, wherein upon one or more predetermined parameters the internal angle between a centered side and one or both of the adjacent sides is increased or decreased.

14. A system for generating and populating a three-dimensional wireframe body comprising a processor that is arranged to;
- retrieve data elements to be displayed to a user, the data elements being stored on a remote server,
- generate a three-dimensional wireframe body having a plurality of sides, with at least one side being divided into a plurality of receiving slots,
- arrange and display the data elements in the plurality of receiving slots of the wireframe body, and
- allow a user, through a user input means, to rotate the filled three-dimensional wireframe body along at least one axis.

15. A non-transitory computer readable medium having stored thereon a set of computer readable instructions for causing a processor to generate and populate a three-dimensional wireframe prism comprising the computer implemented steps of;
- retrieving data elements to be displayed to a user, the data elements being stored on a remote server,
- generating a three-dimensional wireframe body having a plurality of sides, with at least one side being divided into a plurality of receiving slots;
- arranging and displaying the data elements in the plurality of receiving slots of the wireframe body, and
- allowing a user, through a user input means, to rotate the filled three-dimensional wireframe body along at least one axis.
